# EUROPEAN PATENT APPLICATION

(11) **EP 0 918 270 A1**
(43) Date of publication of application: **26.05.1999**
(21) Application number: 98119991.2
(22) Date of filing: 22.10.1998
(51) Int. Cl.: G05D 23/02

(54) **Thermostatic valve and manufacturing method thereof**

(30) Priority: 23.10.1997 IT TO970930
(71) Applicant: ELTEK S.p.A., I-15033 Casale Monferrato (Alessandria) (IT)
(72) Inventor: Gadini, Costanzo, Casale Monferrato Al (IT); Gaj, Renato, Casale Monferrato Al (IT); Belfiore, Stefano, Borgo San Martino Al (IT)
(74) Representative: Dini, Roberto, Dr. Ing.

(57) **Abstract**

Thermostatic valve for controlling the flow of a fluid, specifically of the type where a valve shutter is movable for opening a fluid passageway to a substantial extent starting from a preset fluid temperature only, comprising a body (2) having at least a first opening (3) and a second opening (7), a cavity (C) extending between said two openings (3,7), wherein components are housed, which comprise at least an actuator device (11-15) sensitive to the fluid temperature and a movable shutter (16,17) acting on said fluid passageway (18) and actuated by said actuator device (11-15); according to the invention, means are provided which allows the insertion of said components in said cavity (C) through only one (3) of said openings (3-7).

## Description

The present invention relates to thermostatic valves, i.e. valves of the type comprising a movable shutter operating on a fluid passageway, where the shutter is actuated by a actuator device being sensitive to the temperature of the fluid whose flow rate has to be adjusted, and to a manufacturing method thereof.

Valves of the type mentioned above, or thermal expansion valves, are known and employed in various fields, such as in the field of water mixers being connected with hot and cold water supply pipes in sanitary systems for house building construction, which allow to get from a nozzle mixed water at a desired constant temperature. Another field of application concerns wall hot water boilers, where thermostatic valves are of the type being able to let a substantial fluid flow only when the fluid itself has reached a preset temperature, but at the same time also allow for the passage of at least a defined fluid flow rate, for special reasons, as explained in the following.

The operation of the valves of the above mentioned type is based on a shutter, which is moved for closing or opening a fluid passageway by means of a thermal-sensitive actuator device, i.e. a device being actuated by the same temperature of the fluid whose flow has to be adjusted.

Said thermal-sensitive device usually consists of a thermal head, i.e. an actuator device which comprises a container made of a thermal conductive material, within which a material (such as a wax) is contained, being capable of expanding in function of the temperature reached by the container licked by the fluid; in such a container, at least a portion of a shaft or piston is also inserted, which is pushed in the external direction to the container, for actuating the valve shutter, should the wax volume increase.

An adjusting thermostatic valve, of the type provided for the use on boilers, is disclosed in the Italian patent no. 1.221.394.

Thermostatic valves, such as the one disclosed in the above Italian patent, have the drawback of a difficult assembly.

According to the present state of the art, in fact, the valve components cannot be inserted in the valve body through one only of its two end openings; this fact complicates the assembling of the device and, for instance, makes the assembly through automated machines more difficult; additionally, the valve body, due to the size and configuration of such components, has to be manufactured at least in two separate parts to be coupled together, so making the assembling of the device even more complex and adversely affecting the price of the product. Another drawback concerning the known solutions is that the container of the thermal-sensitive device comprises internal diaphragm, for fully isolating the actuating shalt or piston from the area where wax is contained; this fact determines a certain encumbrance of the known containers, so that their use on small valves is difficult.

The present invention has the of purpose of indicating a thermostatic valve being improved with respect to the present state of art; within this frame, it is a first aim of the present invention to provide a thermostatic valve which may be assembled in an easy, fast and economical manner. A further aim of the invention is then to provide a thermostatic valve which has small dimensions.

These and other aims, that will become clear in the following description, are attained according to the present invention by a thermostatic valve and a manufacturing method thereof having the features of the annexed claims, which form an integral part of the present description.

Further aim, features and advantages of the present invention will become apparent from the following detailed description and the annexed drawings, which are supplied by way of non limiting example, wherein:
- Figs. 1, 2 and 3 show a side view, a side section and a plan view, respectively, of a thermostatic valve according to the present invention;
- Figs. 4 - 4A, 5 - 5A, 6 - 6A, 7 - 7A, 8 - 8A, 9 - 9A, 10 - 10A, 11 - 11A show different views of various details of the thermostatic valve of Figs. 1, 2 and 3;
- Fig. 12 shows a side section of the thermostatic valve according to the present invention, under a different working condition with respect to the valve represented in Fig. 2;
- Figs. 13 - 13A, 14 - 14A show different views of two details of a thermostatic valve according to a possible variant embodiment of the present invention;
- Fig. 15 shows a side view of a thermostatic valve according to the embodiment represented in Figs. 13 - 13A, 14 - 14A

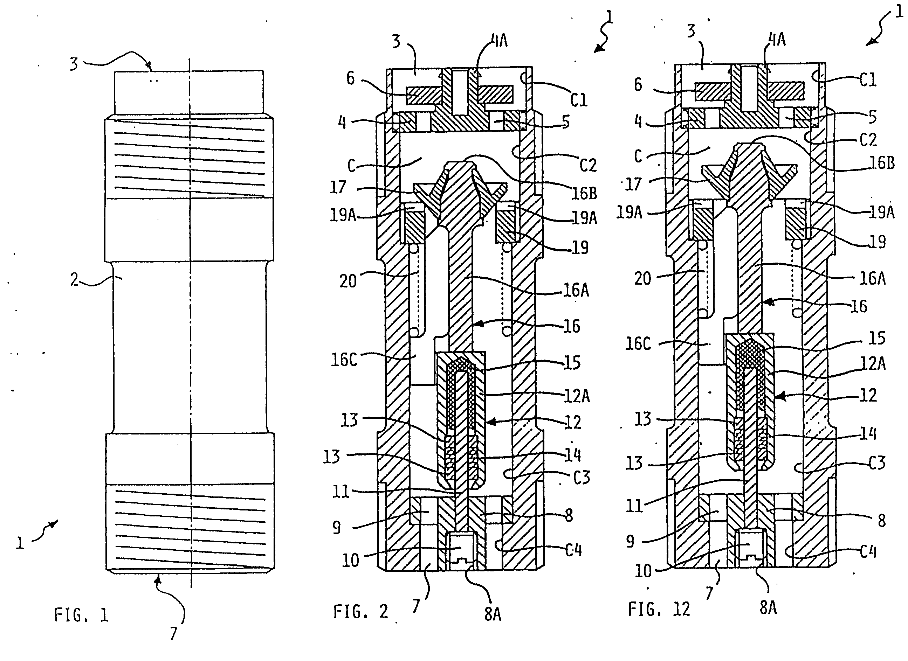

In Figs. 1, 2 and 3 reference number 1 indicates as a whole the thermostatic valve according to the present invention.

In this example, the valve 1 is provided for combined use with a wall boiler, not appearing in the figures, which is used for example for heating water in a household sanitary system. Such a boiler is equipped with an element fit to heat the flowing water, which is activated when a water tap is turned on by the user; such boilers, in fact, are generally so manufactured that when the water tap is turned on, the passage of at least a given flow rate of water causes said heating element to switch on; when the water tap is turned off, and therefore the fluid passage through the boiler is stopped, the heating element is switched off.

Boilers as described above have the drawback that, when the water tap is turned on, the water exiting this latter is cold for all the time required by the boiler to reach the operating temperature. Consequently, the water tap is usually turned on to an excessive extent, i.e. over a minimum threshold for the boiler heating element to be activated, in the belief that water will heat up faster; however, this habit often leads in reality to a water waste, which can be removed right by the use of a thermostatic valve, as further explained.

The valve 1 has a tubular body 2 made of a single piece, for example in thermoplastic material, which is open on both ends and has inside a cavity C having a substantially circular section, to house a set of elements being part of the valve according to the present invention; as it can be seen in Fig. 2, the cavity C has four different sections, indicated with C1, C2, C3, C4, each having a different diameter with respect to each other; in particular, with reference to Fig. 2, from the top to the bottom, each section has a diameter being smaller than the previous section.

In this way, steps are defined in the zones from one section to the other, which form positioning and/or fastening seats for some internal components of the valve 1.

Reference number 3 indicates the upper opening 3 of the body 2, to which section C1 corresponds, having the largest diameter. As it can be noticed, a step is defined between the section C1 and the next section C2, said step providing a first positioning and/or fastening seat for a flow regulator (4-6).

Such a flow regulator consists of a substantially discoid element 4 made of plastic material, which defines some openings 5 for the fluid passage; the element 4 also has a central protrusion A4 used for the fixing of a diaphragm 6 made of rubber or similar material; said diaphragm 6 is suitable to flex under the thrust of the fluid entering the opening 3, so as to determine a constant flow through the openings 5.

The element 4 can be fixed with interference in the body 2, in correspondence with the relevant seat defined between sections C1 and C2; alternatively, other types of coupling may be provided, such as a snap fit coupling, or a bayonet coupling, or a threaded coupling. In any case, the external surface of the element 4 is provided with proper means for its coupling with the surface of the cavity C; moreover, the fixing of the element 4 can be obtained, or improved, by ultrasound welding, or hot riveting, or glue bonding, etc..

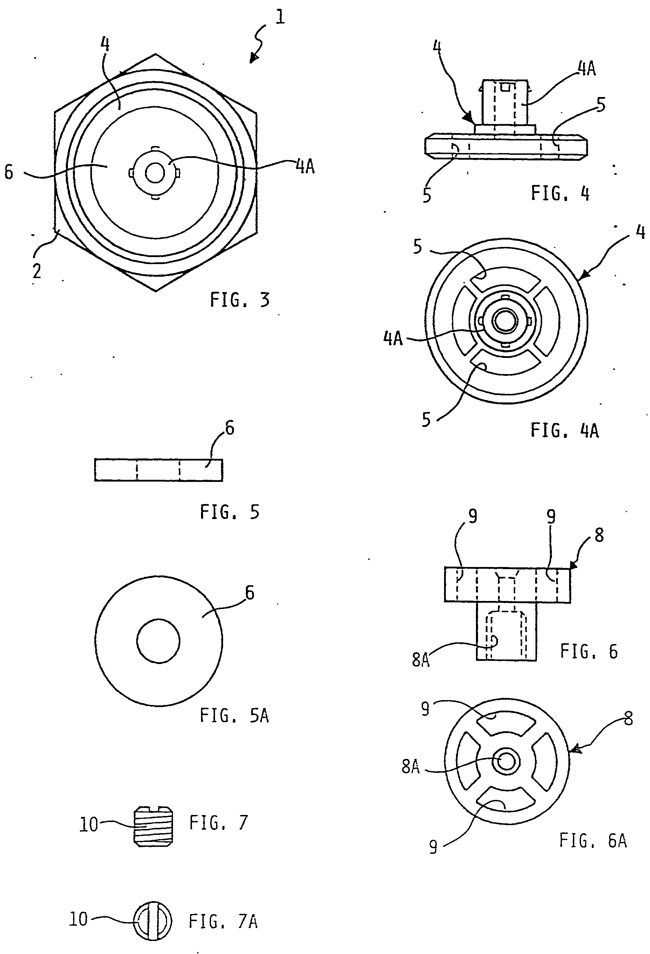

The components of the flow regulator, i.e. the element 4 and the diaphragm 6 are represented in side view on Figs. 4 and 5 and in plan view on Figs. 4A and 5A, respectively.

It should anyway be appreciated that the flow regulator described above represents an optional element of the valve 1 according to the present invention, since it is not strictly necessary to ensure the correct valve operation.

Always with reference to Fig. 2, number 7 indicates the lower opening of the body 2, which is in correspondence with the section C4 having the smallest diameter. As it can be seen, between the section C4 and the previous section C3, a step is defined to provide a positioning and/or fastening seat for a supporting element 8.

This support 8, also shown in a side view and a plan view in Figs. 6 - 6A, has a shape being substantially similar to the element 4, since it is substantially disk shaped and has passage openings 9 for the fluid.

The support 8 can be fixed with interference in the body 2, in correspondence with the relevant seat defined between sections C4 and C3; alternatively, other types of coupling may be provided, such as a snap fit coupling, or a bayonet coupling, or a threaded coupling; however, also in this instance the external surface of support 8 has proper means for its coupling with the surface of the cavity C; moreover, fastening of the support 8 can be obtained or improved by ultrasound welding, hot riveting, glue bonding, etc.

The support 8 defines a seat 8A in its central area, whereby an adjusting element 10 is inserted in the lower portion of said seat, such as a dowel or a screw, as it can be seen in the side and plan views of Figs. 7 and 7A; an end portion of a movable pin 11, which is inserted in the opposite part of that same seat 8A, rests on the adjusting element 10.

The support 8, the element 10 and the pin 11 as a whole form a regulator of the position of the valve working point, as it will be made clear in the following.

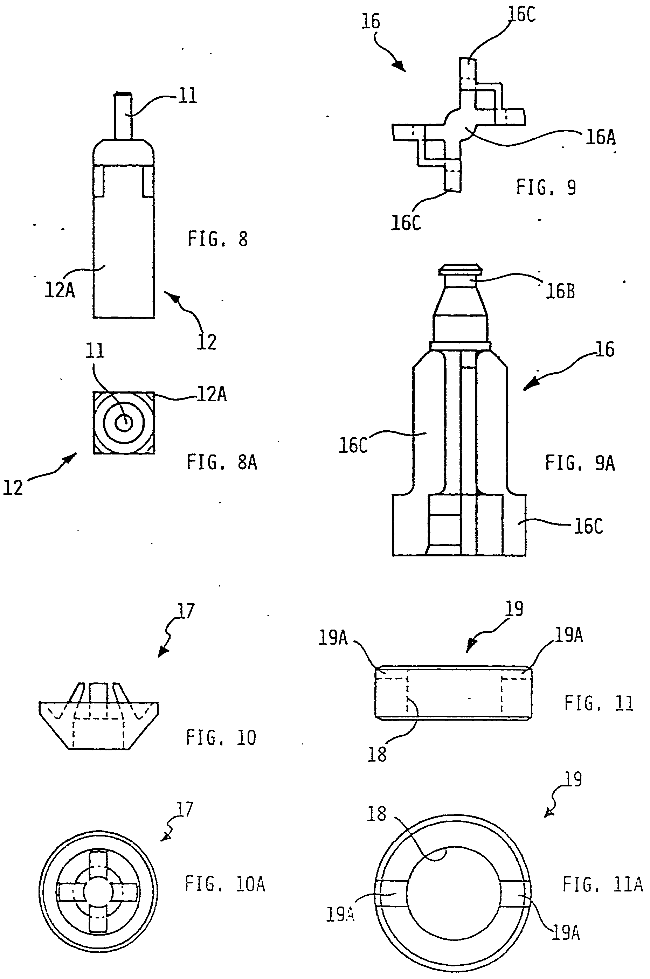

The opposite end portion of the pin 11 is inserted in an opening of a container 12A, made of a thermal conductive material, such as a metal, being part of a thermal-sensitive element or thermal head 12; as it can be seen in Figs. 8 - 8A, which show said thermal-sensitive element in a side view and plan view, such a container 12A has a substantially square section, whose sides are in the order of 6 x 6 mm; such a substantially square section provides advantageously some resting points for the container 12A, in correspondence with its corners, though ensuring the required side passage for the fluid.

As it can be seen in Fig. 2, within the container 12A, in the zone of the cited opening, metal washers 13, at least a flexible bush 14 and/or possibly an O-Ring seal are arranged. Always in the container 12A, in the zone opposite to the washers 13 and the bush 14, a material 15 is present, being expandable in function of temperature, such as a wax. A good portion of the pin 11 is dipped in the wax 15 and the washers 13 and the bush 14 make a seal between such a pin 11 and the walls of the container 12A, for hindering an outflow of said wax.

The container 12A is associated with a movable shutter 16, which is shown in section and side views in Figs. 9-9A. Such a shutter 16 has a section being substantially cross shaped, comprising a main shaft 16A, a head 16B and guides or centering and positioning wings 16C; specifically, guides 16C act as centering elements for the shutter 16 in the cavity C and also ensure a correct positioning of the thermal head 12 in the center of the shutter 16.

The head 16B is coupled with a closure element 17, such as a seal, also represented in side view and plan view in Figs. 10 - 10A, which is fit to occlude a passageway of the fluid; also this coupling may be obtained for example by snap fitting, or threading, or glue bonding, or ultrasound welding or riveting, or still by material re-melting, etc.

The cited passageway, being indicated with 18, is defined by a holed element 19 arranged on a positioning seat obtained through the step existing between the section C2 and the next section C3 of the cavity C; the holed element 19 is properly threaded along its external circumference, to allow screwing on a suitable thread of the body 2; alternatively, the holed element 19 can be wedged in the cavity, or coupled to it through a snap fit, bayonet or other suitable coupling; also in this instance, therefore, the external surface of the element 19 has suitable means for its coupling with the surface of the cavity C; here too, fastening of the holed element 19 can be obtained or improved by ultrasound welding, hot riveting of the material or glue bonding, etc.

As it can be seen in the example according to the side and plan views of Figs. 11 - 11A, such a holed element 19 has at least two upper grooves 19A, which operate as gauged channels to ensure a minimum fluid flow through the passageway 18 at all time, even with the shutter 16-17 being closed.

Such a minimum flow has the function of allowing the thermal-sensitive element 12 to detect the temperature of the fluid entering the valve also in its initial working phase, i.e. with the shutter 16-17 being closed; another significant function of the flow, for the application herein shown by way of example, is to ensure the passage through the boiler of the minimum fluid flow rate being required to cause ignition of the heating element of the fluid.

The grooves 19A are advantageously fit to receive a tool tip, for the screwing of the holed element 19 in the body 2 during the assembling.

It should be underlined that the space taken up by the head 16B of the shutter 16 is smaller than the diameter of the passageway 18 defined in the element 19, so that such a head 16B does not constitute a hindrance for the positioning of the holed element 19 in the cavity C, as described later.

Finally, in Fig. 2 number 20 indicates a contrasting flexible element, such as a spring, located between the element 19 and the shutter 16, in order to keep the shutter 16 in the substantially closed position of the outlet 18, when the valve is in the rest position.

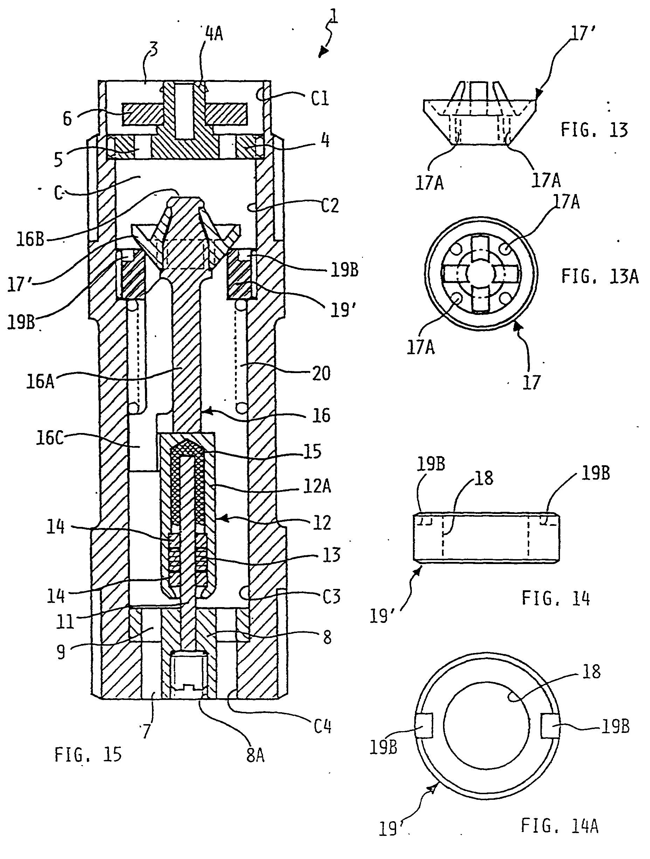

The operation of the thermostatic valve 1 according to the present invention is now described with reference to Figs. 2 and 12; as it will be appreciated, in the above example the opening 3 realizes the fluid inlet to the valve, whereas the opening 7 is its outlet.

The thermostatic valve 1 according to the present invention is of the normally closed type, and therefore, when in its rest condition, it has the position shown in Fig. 2, wherein the shutter 16-17 is partially obstructing the outlet 18. However, as mentioned above, the presence of the grooves 19A allows in all cases for a minimum fluid passage: a portion of the fluid entering the body 2 is therefore free to lick the container 12A of the thermal-sensitive element 12.

Therefore, with reference to the application of the given example, when the user of the hydraulic system turns on the hot water tap, only the grooves 19A allows a flow of the fluid capable of causing the ignition of the boiler heating element.

When the temperature of the fluid licking the container 12A exceeds a preset threshold, wax 15 starts to expand; as a result, the container 12A is gradually shifted upwards, by the wax expansion, so that also the shutter 16-17 is moved upwards with a consequent opening of the passageway 18. This situation is shown in Fig. 12: as it can be noticed, under this condition, a large volume of fluid is free to flow through the body 2 and exit though the lower opening 7.

Thus, even if the thermostatic valve 1 is of the normally closed type, it is able to move its own shutter, and open in a substantial way the passageway of the fluid, starting from a preset temperature only of the latter. This fact allows for obviating the drawback previously mentioned about water waste.

It is then clear that, whenever the fluid temperature starts falling below the above preset threshold, the wax 15 will tend to reduce its volume, so causing the shutter 16-17 to return to a closed position for the passageway 18. It is also clear that when the user turns off the hot water tap completely, the fluid flow through the boiler will stop, the boiler heating element will be disarmed and the resulting temperature reduction of the fluid will cause the shutter 16-17 to go back and close the passageway 18.

As said, the support 8 and the element 10 form a position regulator, to establish the valve working point. In fact, by acting on the screw or dowel 10, the rest point of the pin 11 can be changed. Specifically, this calibration allows for varying the length of the portion of the pin 11 inserted in the wax 15, and consequently the ratio of the wax volume to the chamber containing it: in this way, it is possible to both preset the switch-in temperature of the valve and balance likely tolerances when filling the container 12A with wax.

The assembling of the thermostatic valve according to the present invention as shown in the non limiting example of the annexed drawings is as follows.

First of all, the supporting element 8, eventually inclusive of the adjusting element 10, is inserted from the top in the body 2, i.e. through the opening 3, until it rests on the seat formed by the step defined between sections C3 and C4, where it is fastened as described above.

Subsequently, the actuator device consisting of elements 11-15 is also inserted in the body 2 through the top opening 3, so that the external end of the pin 11 results in being inserted in the seat 8A.

Alternatively, a pre-assembly consisting of the support element 8-10 and the actuator device 11-15 can be inserted in one step only in the body 2. Always through the opening 3, on the top, the below listed components are inserted in the body 2 in the following sequence:
- the shutter 16, until it rests on the container 12A of the thermal-sensitive element 12,
- the spring 20, until it rests on the shutter 16, specifically over a portion of the centering wings 16C,
- the element 19, until it reaches its positioning seat defined between sections C2 and C3 of the cavity C contrasting the spring action 20.

Also in this instance the element 19 will be screwed on the body 2 or coupled otherwise, so as to have the spring 20 compressed.

The correct positioning of the holed element 19, which is inserted in the body 2 after the shutter 16, is possible in that the head 16A has a smaller encumbrance with respect the diameter of the passageway 18 of the holed element 19.

Then the closure element or seal 17 is inserted in the body 2 through the top opening 3 and fastened as described above on the head 16A of the shutter 16.

Finally, either if required or desired, the flow regulator consisting of elements 4 and 6 is inserted through the top opening 3 and placed in correspondence with the positioning seat defined between sections C1 and C2. Also in this instance, the fixing of the regulator 4 within the cavity C can be obtained in the ways described above or through any other coupling method according to the present state of art.

It will be appreciated that according to a possible variation of the present invention, wings 16C of the shutter 16 may also have a fixing or engaging function to the container 12A of the actuator device; in this instance, a pre-assembly consisting of the actuator device 11-15 and the shutter 16 can be obtained and inserted in one operation in the body 2.

Such a solution can be extended to provide also for pre-assembly of the support element 8-10, the actuator device 11-15 and the shutter 16, which can then be inserted in one operation in the body 2.

As it will be appreciated, a set of seats having different size sections is provided inside the body 2, with the purpose of inserting the various components in the cavity C in a given sequence and house them in predetermined seats. Specifically, in the example shown in the figures, the seat having smallest dimensions is the one provided to position the first component inserted in the body 2, which has the smallest diameter, whereas the seat with largest dimensions is provided to position the last component of the assembling sequence, having the largest diameter.

It is clear, on the other hand, that according to a possible variant embodiment of the present invention, the dimensions of both the components and relevant position/fastening seats, as well as the orientation of internal components may differ from the ones described by way of example, so as to obtain a substantially inverted sequence of insertion than that described above, i.e. the flow regulator 4-6 is inserted at the beginning of the sequence and positioned in correspondence with the seat having the smallest diameter, while the position regulator is inserted during the last operation of the sequence and positioned in correspondence with the seat having the largest diameter.

From the above description, it is also clear that, according to the present invention, the various elements forming the thermostatic valve 1 are all inserted on one same side, i.e. through the top opening 3, due to the fact that the cavity C has a mainly decreasing section starting right from that opening: this fact considerably facilitates the assembly process of the device and the fixing of the components in correspondence with their relevant positioning seats, which can be easily automated. i.e. realized with the use of automatic machines.

The features of the thermostatic valve object of the present invention are clear according to the above description. Also the advantages of the invention are clear, and specifically:
- the fact that the various described components can be inserted through one same end of the valve body considerably facilitates the valve assembling and provides advantages in view of the automation of production; also the valve body can be manufactured as a single piece;
- the fact that the shaft of the thermal-sensitive element is dipped directly in the wax allows for a reduction of the dimensions of the element itself the possibility of manufacturing thermostatic valves having a smaller size, which can be used also in piping having a reduced section.

It is obvious that many variations are possible for the man skilled in the art to the thermostatic valve described above by way of example, without departing from the novelty spirit of the innovative idea, and it is also clear that in the practical actuation of the invention the elements and materials may differ in form and size from the ones described and be replaced with technical equivalent elements.

A first variant embodiment, for instance, may have holes or similar on the closure element 17, instead of grooves 19A on the holed element 19, which allow for the passage of a minimum flow rate of the fluid. This embodiment is shown in Figs. 13 - 15.

In Fig. 13 there is shown a closure element or seal 17', directly provided with passage means consisting of holes 17A.

According to this embodiment, the element defining the passageway 18 may anyway have partial grooves, i.e. having dimensions that do not allow for a flow passage, but enough for using a screwing tool for the purposes of assembling the device. In Fig. 14, in fact, it can be seen how a holed element 19' may have smaller grooves 19B, also visible in Fig. 15, which do not form a passage path. It is also clear that grooves or seats to favor screwing operation during the assembling may be provided on other internal components of the valve.

In a second possible variation of the invention, the thermal head 12 may be upturned with respect to the example shown in the figures; in this instance, the pin 11 will rest on the shutter 16-17, while the container 12A will rests on the regulator element 10, that will be longer with respect to the one shown in the figures.

Finally, it is clear as mentioned above, that the coupling of the various elements with the surface of the cavity C in correspondence with their positioning seats can be obtained through any solutions according to the present state of art.

## Claims

1. A thermostatic valve for controlling a flow of a fluid, comprising a body (2) having at least a first opening (3) for the fluid and a second opening (7) for the fluid, a cavity (C) extending between said two openings (3,7), within which components (4-6, 8-10, 11.15, 16-17) are housed, said components comprising at least an actuator device (11-15) sensitive to the temperature of the fluid flowing in the cavity (C) and a movable shutter (16,17) which operates on a passageway (18) for the fluid and is actuated by said actuator device (11-15), characterized in that constructive means (19, C, C1-C4) are provided which, combined with the specific configuration of one or more of said components (4-6, 8-10, 11.15, 16-17, 19), allow for the sequential insertion and/or assembling of said components in said cavity (C) through only one (3) of said openings (3-7).

2. A thermostatic valve according to claim 1, characterized in that at least a surface of one or more of said components (4-6, 8-10, 11.15, 16-17, 19) is shaped for coupling with a surface of said cavity (C).

3. A thermostatic valve according to claim 1, characterized in that said constructive means (19, C, C1-C4) comprise a surface of said cavity (C) defining a plurality of positioning seats for one or more or said components (4-6, 8-10, 11.15, 16-17, 19).

4. A thermostatic valve according to claim 1, characterized in that said constructive means (19, C, C1-C4) comprise at least a section of said cavity (C) having substantially decreasing dimensions starting from the opening (3) through which said components are inserted in said cavity (C).

5. A thermostatic valve according to claim 3, characterized in that said seats have different dimensions between them, in particular a decreasing diameter starting from said first opening (7) to said second opening (3).

6. A thermostatic valve according to claim 5, characterized in that the seat having smallest dimensions is provided for positioning the first component of the sequential insertion, whereas the seat having largest dimensions is provided for positioning the last component of the sequential insertion.

7. A thermostatic valve according to claim 1, characterized in that said constructive means (19, C, C1-C4) comprise a holed element (19) to be associated with said body (2) and with an opening defining said passageway (18) on which said shutter (16-17) operates.

8. A thermostatic valve according to claim 1, characterized in that passage means (17A; 19A) are provided for allowing the passage of a minimum flow of the fluid towards the actuator device (11-15) also when said shutter (16-17) keeps said passageway (18) closed, said actuator device (11-15) being in particular housed within said body (2) in a downstream position with respect to said shutter (16-17) and said passageway (18).

9. A thermostatic valve according to claims 7 and 9, characterized in that said passage means (19A) are comprised in said holed element (19) or in said shutter (16-17).

10. A thermostatic valve according to claim 1, characterized in that said actuator device (11-15) comprises at least a container (12A), within which a material being expandable in function of temperature (15) and an actuating shaft (11) being movable in function of the expansion and reduction of said material (15) are present, a first end of said shaft (11) being in particular dipped directly in said material (15).

11. A thermostatic valve according to claim 5, characterized in that said components (4-6, 8-10, 11.15, 16-17, 19) comprise a position regulator (8-10) of valve working point, said position regulator (8-10) being in particular positioned in correspondence with the seat having the smallest dimensions and/or allowing to change the length of the portion of the shaft (11) dipped in said expanding material (15), and consequently the ratio of the volume of said material (15) to the volume of the chamber containing it.

12. A thermostatic valve according to claims 1 and 5, characterized in that said components (4-6, 8-10, 11.15, 16-17, 19) comprise a flow regulator (4-6), which is specifically housed in correspondence with the seat having the largest dimensions.

13. A thermostatic valve according to at least one of the previous claims, characterized in that said actuator device (11-15) comprises a body (12A) with corners which form rest points, the section of said body (12A) being in particular substantially square.

14. A thermostatic valve according to at least one of the previous claims, characterized in that said shutter (16-17) is movable in order to substantially open said passageway (18) of the fluid only starting from a preset temperature of the fluid.

15. A thermostatic valve according to at least one of the previous claims, characterized in that at least one of said components (19; 19') has grooves or seats (19A;19B) for allowing the use of a screwing tool during an assembling stage of the valve.

16. A method for manufacturing a thermostatic valve for controlling a flow of a fluid, said valve comprising a body (2) having at least a first opening (3) and a second opening (7), a cavity (C) extending between said two openings (3,7) within which components (4-6, 8-10, 11.15, 16-17, 19) are housed, which comprise at least an actuator device (11-15) sensitive to the temperature of the fluid and a movable shutter (16,17), which operates on at least a passageway (18) of the fluid and is actuated by said actuator device (11-15), characterized by carrying out an insertion of said components (4-6, 8-10, 11.15, 16-17, 19) in said body (2) through only one (3) of said outlets (3-7) and according to a predetermined sequence, said components (4-6, 8-10, 11.15, 16-17, 19) being inserted in said body (2) until they are in correspondence with relevant seats defined in said cavity (C) or they rest on a component (4-6, 8-10, 11.15, 16-17, 19) previously inserted in said cavity (C) according to said sequence.

17. A manufacturing method according to claim 16, characterized in that said sequence of insertion of said components (4-6, 8-10, 11.15, 16-17, 19) into said body (2) provides for the following steps:
a) insertion of a supporting element (8-10) of said actuator device (11-15) until said supporting element (8-10) is in correspondence with a relevant seat defined in said cavity (C),
b) insertion of said actuator device (11-15) until it rests on said supporting element (8-10),
c) insertion of said shutter (16) until it rests on said actuator device (11-15),
d) insertion of a flexible element, such as a spring (20),
e) insertion of an element (19) defining a passageway for the fluid until it is in correspondence with a relevant positioning seat defined in said cavity (C),
f) insertion of a terminal element (17), which is coupled with the head (16A) of said shutter (16).

18. A manufacturing method according to claim 17, characterized in that said sequence of insertion of said components (4-6, 8-10, 11.15, 16-17, 19) provides for
- as an alternative to steps a) and b), the insertion into said body (2) of a pre-assembly consisting of said supporting element (8-10) and said actuator device (11-15), until said supporting element (8-10) is in correspondence with a relevant seat defined in said cavity (C);
- as an alternative to steps b) and c), the insertion into said body (2) of a pre-assembly consisting of said actuator device (11-15) and said shutter (16), until said actuator device (8-10) rests on said supporting element (8-10).
- as an alternative to steps a), b) and c), the insertion into said body (2) of a pre-assembly consisting of said supporting element (8-10), said actuator device (11-15) and said shutter (16), until said supporting element (8-10) is in correspondence with a relevant seat defined in said cavity (C).

19. A manufacturing method according to at least one of the previous claims, characterized in that the insertion of a flow regulator (4-6) into said body (2) is further provided through said opening (3) alone, until said flow regulator (4-6) is in correspondence with a relevant seat defined in said cavity (C).

20. A manufacturing method according to claim 19, characterized in that said flow regulator (4-6) is made integral with said body (2), once it has been positioned in correspondence with its relevant seat.
